(19) Europäisches Patentamt
European Patent Office
Office européen des brevets

(11) EP 1 555 281 A1

(12) EUROPEAN PATENT APPLICATION
published in accordance with Art. 158(3) EPC

(43) Date of publication:
**20.07.2005 Bulletin 2005/29**

(21) Application number: **03754093.7**

(22) Date of filing: **10.10.2003**

(51) Int Cl.[7]: **C08G 75/23**, B01J 39/18

(86) International application number:
**PCT/JP2003/013085**

(87) International publication number:
**WO 2004/035660 (29.04.2004 Gazette 2004/18)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **15.10.2002 JP 2002301076**

(71) Applicants:
- **NIPPON KAYAKU KABUSHIKI KAISHA**
  **Tokyo 102-0071 (JP)**
- **Sanko Chemical Co., Ltd.**
  **Tokyo 103-0023 (JP)**

(72) Inventors:
- **HAMADA, Masahiro**
  **Saitama-shi, Saitama 330-0835 (JP)**
- **HOTTA, Hiroki**
  **Saitama-shi, Saitama 330-0001 (JP)**
- **IWABUCHI, Jun**
  **Saitama-shi, Saitama 331-0052 (JP)**
- **KAWAKAMI, Shogo**
  **Hiki-gun, Saitama 355-0802 (JP)**
- **YAMASAKI, Takemichi**
  **Koza-gun, Kanagawa 253-0111 (JP)**
- **KOBAYASHI, Hisabumi**
  **Ageo-shi, Saitama 362-0047 (JP)**

(74) Representative:
**Gille, Struck, Neidlein, Prop, Roos**
**Patentanwälte**
**Brucknerstrasse 20**
**40593 Düsseldorf (DE)**

# (54) PROCESS FOR THE PRODUCTION OF SULFOALKYL-CONTAINING POLYMERS

(57) The invention relates to a process for the production of sulfoalkyl-containing polymers useful as ion-exchange resins, more particularly a process for the production of sulfoalkyl-containing polymers, characterized by subjecting a polymer having side chains represented by the structural formula (1):

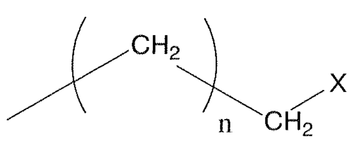

( I )

[wherein X is a leaving group, and n is an integer of 0 to 6] to replacement of X by acylthio, and then oxidizing the acylthio groups into sulfonic acid groups. According to the process, even the leaving groups (X) contained in the polymer matrix can be nearly quantitatively replaced by sulfonic acid groups, whereby an ion-exchange resin having high ion-exchange capacity can be obtained.

EP 1 555 281 A1

## Description

TECHNICAL FIELD

The present invention relates to a process for the production of sulfoalkyl-containing polymers useful as ion-exchange resins comprising sulfoalkyl groups as ion-exchanging groups.

BACKGROUND ART

Ion-exchange resins comprising ion-exchange groups in the polymers are useful as functional polymers such as membranes for separation or purification, particularly ion-exchange resins comprising sulfonic groups have been widely adopted because of the excellent properties due to their high proton dissociation rate. Particularly in recent years, many attempts have been made to utilize them for solid polymer electrolytes ion-conductors such as permeable membranes for water electrolyzers and fuel cells.

The sulfonated resins, wherein aromatic rings in the polymers are sulfonated by sulfonating agents such as sulfuric acid or chlorosulfuric acid have been readily used as resins having sulfonic groups in their polymers. For example, sulfonated polyether ketone (Japanese Unexamined Patent Publication No.H06-93114/1994), sulfonated polysulfone (Japanese Unexamined Patent Publication No.H09-245818/1997), sulfonated polyethersulfone (Japanese Unexamined Patent Publication Nos. H09-245818/1997 and H11-116679/1999), and the likehavebeenreported. However, as shown in the above examples, sulfonated aromatic rings are not stable enough under acidic condition at a high temperature. This may be recognized as caused by a desulfonation reaction resulting from reversible reaction in the sulfonation reaction of aromatic rings. The ion-exchange membranes, where aromatic rings are directly sulfonated, are inferior in durability, thereby have a problem in a long term storage stability in use for the electrolytes.

Consequently, several methods for introducing a sulfonic group into a polymer of a base material through an alkyl group have been reported, e.g. the method of introducing a sulfoalkyl group having 3 or more carbon atoms directly into an aromatic ring of the aromatic hydrocarbon polymers using Lewise acid and sultone (Japanese Unexamined Patent Publication No. 2002-110174; (p.4-5, Example 1, etc.); Macromol. Chem., Rapid Commun., 1, 1980, 297-302), or the method of introducing a sulfonic group by using dimethylthioether with sodium sulfite or sodium hydrogen sulfate following to the intorduction of a halogenomethyl group or a halogenoalkyl group (Macromol. Chem. , Rapid Commun., 1, 1980, 297-302).

However, the method using sultone is not practical because little or none of the targeting sufoalkylated compounds are obtainable due to the low reactivity of sultone. With reference to the latter method of sulfonating a hologenometyl group by using a sodium sulfite, the reaction should originally be conducted in an aqueous medium, however, most of the halogenoalkylated polymers being unsoluble in water, halogenoalkyl groups are not reactive at all or only partially reactive, so that the polymers were sulfonated only in the surface thereof, it was difficult to obtain the polymers having a sulfoalkyl side chain and exhibiting satisfactory ion-exchange performance. Because of the above, it was difficult to introduce sulfonic groups into the polymer matrix.

As mentioned above, the ion-exchange resins having sulfoalkyl groups as ion-exchange groups are yielded at a very low rate by the method introducing sulfoalkyl groups directly into polymers of base materials. The method of introducing an alkyl group having a leaving group into polymers and then converting the said leaving group into a sulfonic group has such a problem that the leaving group, particularly the leaving group in the polymer matrix cannot be converted into a sulfonic group at a satisfactory rate.

Namely the object of the present invention is to produce sulfoalkyl-containing polymers having high ion-exchange capacity with a high yield and at a low cost, from the polymers wherein alkyl groups comprising leaving groups are introduced, by quantitatively converting said leaving groups (including all leaving groups located on the surface or inside of the polymer matrix) into sulfonic groups.

In order to solve the problems, the present inventors made a diligent study and consequently completed the invention by finding out the method of converting the leaving group on the side chain of the polymers into an acylthio group and further converting it into a sulfonic group.

DISCLOSURE OF THE INVENTION

Namely, the present invention relates to:

(1) A process for the production of sulfoalkyl-containing polymers characterized by subjecting a polymer having a side chain represented by the following structural formula (I) containing a leaving group X:

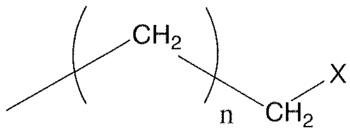

(I)

[wherein X is a leaving group, and n is an integer of 0 to 6] to substitution of X with an acylthio group, and then oxidizing the acylthio group into a sulfonic group,

(2) The process for the production according to the above (1), wherein n in the side chain (I) is 0,

(3) The process for the production of sulfoalkyl-containing polymers according to the above (1) or (2), wherein a leaving group X is Cl, Br, I or a substituent represented by the following formula (II):

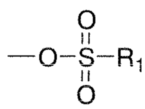

(II)

[wherein $R_1$ is an alkyl group having 1 to 6 carbon atoms, a perfluoro($C_1$-$C_3$)alkyl group or an aryl group],

(4) The process for the production of sulfoalkyl-containing polymers according to any one of the above (1) to (3), wherein an acylthio group is represented by the following formula (III):

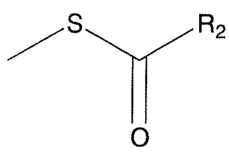

(III)

[wherein $R_2$ is an alkyl group having 1 to 6 carbon atoms or an aryl group],

(5) The process for the production of sulfoalkyl-containing polymers according to any one of the above (1) to (4), wherein the backbone structure of the polymer is a polysulfone structure represented by the following formula (IV):

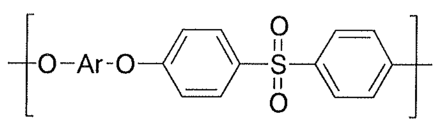

(IV)

wherein Ar is

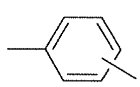 (A1) , 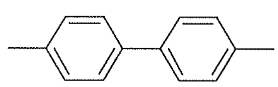 (A2) ,

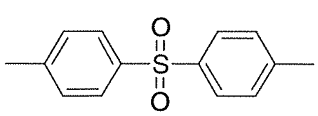 (A3) or 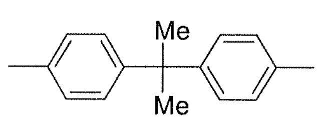 (A4)

(6) A process for the production of sulfomethylated polysulfone represented by the following formula (V):

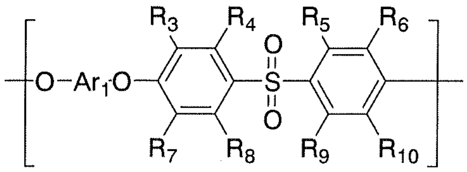 (V)

[wherein $Ar_1$ is

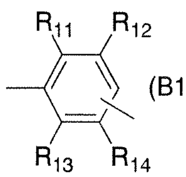 (B1) , 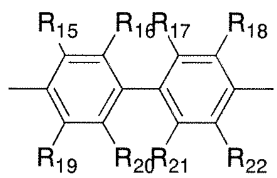 (B2) ,

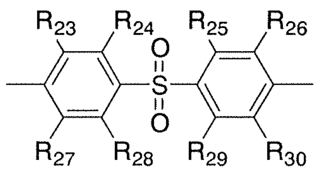 (B3) or 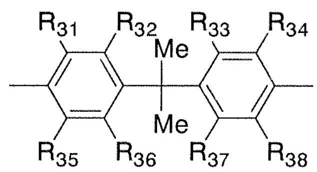 (B4)

and $R_3$ to $R_{38}$ independently represents a hydrogen atom or a sulfomethyl group], characterized by subjecting an aromatic ring of the polysulfone polymers represented by the following formula (IV):

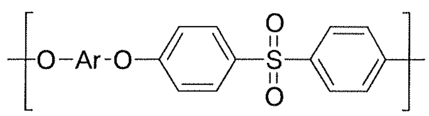 (IV)

[wherein Ar is

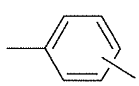 (A1) , 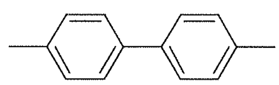 (A2) ,

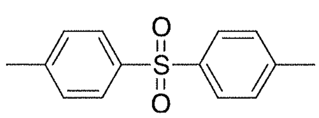 (A3) or 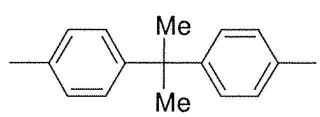 (A4) ,

to (a) chloromethylation, (b) then converting the chlorine atom of the chloromethyl to acetylthio group, followed by further oxidation to be converted into a sulfonic group,

(7) An acetylthiomethyl-containing polysulfone, which is a precursor of sulfomethylated polysulfone, represented by the following formula (VI):

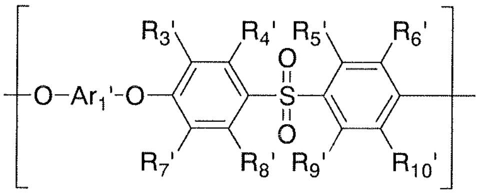 (VI)

[wherein $Ar_1'$ is

, 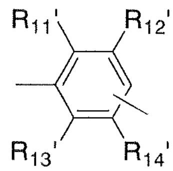 (B1)' , 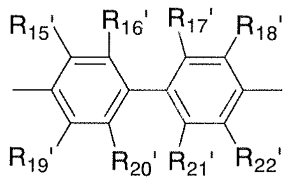 (B2)' ,

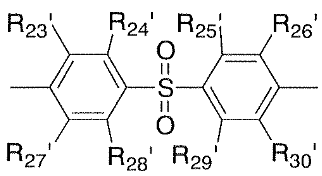 (B3) or 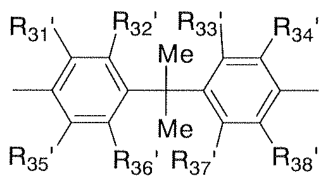 (B4)'

$R_3'$ to $R_{38}$ independently is a hydrogen atom, or

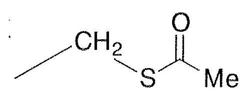

.

BEST MODE FOR CARRYING OUT THE INVENTION

The present invention will be described below in more detail.

The polymer, a base material of the sulfoalkyl-containing polymer of the present invention can be any as far as it is introducible the side chain (I) having a leaving group X. In view of durability, polymers with high durability such as engineering plastics and crosslinkable polymers are preferable. Examples of those include the commercially available polyethersulfone, polysulfone, polyetherketone, polyetheretherketone, polyphenyleneoxide, polyimide, polyimidazole, polyoxazole, polystyrene-divinylbenzene copolymer, and quasi thereof. The preferable base material is an aromatic hydrocarbon polymer which has a structural unit typically comprising an aromatic ring, preferably a benzene ring . More preferably is a polysulfone which has a structural unit comprising 2 to 4 of aromatic rings, where at least two of them are bonded through a sulfonyl group ($-SO_2-$). Such a polysulfone compound is disclosed, for example, in Japanese Unexamined Patent Publication No. H11-116679/1999. The preferable polysulfones in the present invention include a polysulfones represented by the above formula (IV). More preferable polysulfones represented by the formula (IV) are those of which Ar is a phenylene or a biphenilene group. Additionally, the above described side chain (I) is generally substituted on a benzene ring of those polymers.

The polymer (occasionally referred to as "a base material" hereinafter) into which introduced the side chain having a leaving group X is known or can be obtained by the polymer reaction in accordance with the known method or quasi thereof, where a side chain having a leaving group is introduced to the base material. The compound wherein the said side chain is introduced to the stylene-divinylbenzene thereof is disclosed, for example, in Macromol. Chem., Rapid Commun. , 1, 1980, 297-302 or Macromol. Chem. 184, 1585-1596(1983). Moreover, the polymer wherein the side chain is introduced into the polysulfone is disclosed, for example, in Japanese Unexamined Patent Publication No. 2002-110174. Further, the polymer wherein the side chain is introduced can be obtained essentially according to

the methods disclosed therein by introducing the side chain into polymers other than disclosed in the above. More particularly, the methods include: (a) firstly lithiating the base material with alithiation agent such as n-butyl lithium tetramethylenediamine, then introducing the side chain using alkylation agent having a leaving group such as dihalide according essentially to the method disclosed in J. Org. Chem., 45, 1980, 2717-2719, and (b) the method for introducing the acyl side chain having a leaving group by Friedel-Crafts Reaction (where required the reduction of a carbonyl group after sulfonation of the leaving group) according essentially to the method for introducing the side chain to stylene-divinylbenzene disclosed in Macromol. Chem. 184, 1585-1596.

When introducing a halogenomethyl group which is the preferable side chain of the present invention to an aromatic ring of said polymer, halogenomethylation of an aromatic ring can be carried out according to any known reactions without any particular limitation. For example, chloromethylation can be carried out using the chloromethoxy substituted lower ($C_1$-$C_8$)alkane (wherein substituents other than chloromethoxy can be used that do not inhibit chloromethylation) including chloromethylether, 1,4-bis(chloromethoxy)butane and 1-chloromethoxy-4-chlorobutane as chloromethylation agents, and Lewis acids including tin chloride, zinc chloride, aluminum chloride and titanium chloride, or a hydrofluoric acid as catalysts. The solvents are not particularly limited as far as they are inert, examples of those include chlorosubstituted aliphatic or aromatic hydrocarbon solvents such as dichloroethane, trichloroethane, tetrachloroethane, chlorobenzene, dichlorobenzene and nitrobenzene, or other inert aromatic hydrocarbon solvents. The chloromethylation is preferably carried out in homogeneous system. Also, halogenomethylation can be carried out by using paraformaldehyde with hydrogen chloride or hydrogen bromide. The reaction temperature is not particularly limited as far as hologenomethylation can be carried out, however typically is about 0 to 100°C, preferably is about 20 to 90°C.

In the polymer used in the present invention, wherein the side chain having a leaving group X is introduced, the introduction rate of said side chain into said polymer can suitably be selected. Typically used are polymers wherein 0.1 to 2 (where introduction rate is 10 to 200%) of said side chains are introduced per structural unit, preferably 0.1 to 1 (where introduction rate is 10 to 100%). By the method used in the Examples of the present invention, the polymer having the introduction rate of 20 to 60% can be obtained. Meanwhile, the introduction rate of 10% indicates that one of the said side chain is introduced per ten structural units. Namely, the introduction rate of 100% indicates one of said side chain is introduced per one structural unit. Other numeric values showing introduction rates also indicate the same as the above. With respect to said polymer having an aromatic ring, the occurrence of substitution with said side chain is one to two per one aromatic ring, preferably one. As will be described below, the conversion of a leaving group into a sulfoalkyl group can be carried out 100% quantitatively, so that the introduction rate of sulfoalkyl group into polymers is almost the same as the introduction rate of the side chain having a leaving group X into polymers used as materials.

In the polymers having a side chain (I) having the above described leaving group X, the leaving group X is not particularly limited as far as it is reactive with acylthiolation agent, preferably with acetylthiolation agent. Examples of leaving group X include halogen atoms such as C1, Br and I, or the substituents represented by the above formula (II). $R_1$ in the formula (II) includes an alkyl group having 1 to 6 carbon atoms such as a methyl group, an ethyl group, a propyl group and a hexyl group, a perfluoro($C_1$-$C_3$)alkyl group such as a trifluoromethyl group, or an aryl group such as a phenyl group optionally substituted with a($C_1$-$C_3$)alkyl group or a halogen atom or a naphtyl group. Examples of the leaving group represented by the formula (II) include a paratoluensulfonyloxy group, a methanesulfonyloxy group, a trifluoromethanesulfonyloxy group, and the like. The preferable leaving groups of the invention are halogen atoms, particularly is Cl. The preferable side chain connecting a leaving group X and a polymer base material is a polymethylene group having 1 to 6 carbon atoms such as a methylene group, a dimethylene group, a trimethylene group, a hexamethylene group, a pentamethylene group and a hexamethylene group, preferably is a polymethylene group having about 1 to 3 carbon atoms, most preferably is a methylene group. The preferable side chain having a leaving group X is a hologenomethyl group, more preferably is a chloromethyl group.

The process for the production of sulfoalkyl-containing polymers of the present invention is characterized by substituting the leaving group in the polymers comprising the side chain having a leaving group, with an acylthio group, followed by converting it into a sulfonic group by oxidation and thereby introducing a sulfoalkyl group into a polymer. The leaving groups on said side chain having been substituted into polymer matrix can be quantitatively converted into sulfonic groups by passing through acylthio compound as intermediates on the surface and inside of said matrix.

In the present invention, an acyl group includes an aliphatic or aromatic carbonyl group having 1 to 10 carbon atoms, the examples of an aliphatic carbonyl group include an acethyl group, a propionyl group or a butanoyl group and an aromatic carbonyl group include an optionally substituted (e.g. $C_1$-$C_3$alkyl or halogen substituted) aromatic carbonyl group having 6 to 10 carbon atoms such as a benzoyl group, a methyl substituted benzoyl group.

Acylthiolation of a leaving group X can be carried out quantitatively by reacting said leaving group X with acylthiolation agents including, for example, a thio acid having the above described acyl groups, particularly including a thiocarboxylic acid such as a thioacetic acid, a thiopropanoic acid, a thiobutanoic acid, a thiobenzoic acid and thiotoluic acid, preferably a thiocarboxylic acid having 1 to 10 carbon atoms or the salt thereof, preferably the salt of alkali metal such as sodium salt or potassium salt. The amount of the acylthiolation agent to be used can be enough with the

equivalent to the leaving group X or a little more.

The acylthiolation temperature of a leaving group X, though differs depending on the polymers, leaving groups and acylthiolation agents to use, can be suitably selected in a range about 0 - 100°C, generally is about 10-90°C. It can be a room temperature depending on the acylthiolation agents or polymers to use, or can be heated up to about 80°C to promote complete reaction depending on the cases.

As a solvent for acylthiolation of the leaving group X, the aprotic polar solvent such as N-methylpyrolidone, N,N-dimethylformamide, N,N-dimethylacetoamide can be used extensively.

For oxidation of the acylthio compound, organic or inorganic peroxide, for example, an oxidant such as hydrogen peroxide aqueous solution and peracetic acid can be used extensively. The amount to use the oxidant is enough with the equivalent to acylthio groups or a little more. It can be used in an amount 5 or more up to about 10 equivalents to acylthio groups depending on the cases.

The reaction temperature for the oxidation of an acylthio group generally is about 20-90°C, preferably 40-80°C, preferably kept at the same temperature during the reaction.

As a solvent for oxidation reaction of an acylthio group, a solvent which is generally used for oxidation reaction such as acetic acid or dichloromethane can be used extensively.

As the conversion of a leaving group X into a sulfoalkyl group can be carried out 100% quantitatively by the production process of the present invention, the equivalent weight of ion exchange (EW) of the obtained sulfoalkyl-containing polymers can be controlled by adjusting the amount of the leaving group in the precursors. Consequently, the sulfoalkyl-containing polymers having an optional ion exchange equivalent can be synthesized by suitably selecting the contents of the side chain having a leaving group in a polymer used as a base material.

When the sufoalkyl-containing polymers of the present invention is produced, additives generally used for producing the polymer such as plasticizer, stabilizer and parting agent can be used within a range not departing from the spirit or scope of the invention.

## Examples

The present invention will be explained in more detail by the following examples, however, it is to be understood that these examples are not limiting this invention in any manner.

In the Examples the ion-exchange capacity was measured by the titration as follows:

> (W)g of resins were immersed over night in 10ml aqueous solutions of 1N sodium hydroxide to carry out ion-exchange, the resins were then removed by filtration. 2ml of the aqueous solution was pippetted by a whole pipette for titration by Automatic Titrator (HIRANUMA, COM-555) with 0.1N HCl. The ion-exchange capacity was determined according to the following equations:

$$\text{Ion-Exchange Capacity(meq/g)}=(Q0-Qw) \times 0.1 \times F \times 5/W$$

wherein "Q0" is the titiration volume (ml) resluting from the titration of 2ml of 1N sodium hydroxide, "Qw" is the titiration volume (ml) resulting from the titration of 2ml of post ion-exchange aqueous solution. "F" is titer of aqueous solution of sodium hydroxide.

### Example 1

Synthesis of Sulfomethylated polyphenylene ethersulfone (in formula (V), wherein $Ar_1$ = B2);

30g of polyphenylene ethersulfone (Brand Name: Polyphenylsulfone; by Aldrich) and 2 50ml of tetrachloroethane were placed in 500ml 4-neck round bottom flask equipped with a reflux condenser having a desiccant tube containing calcium chloride, a stirrer and a thermometer, then was added 50ml of chloromethylmethylether, followed by added the mixture solution of 1ml of tin chloride anhydride(IV) and 20ml of tetrachloroethane dropwisely, and the mixture was heated and stirred at 80°C for 90 minutes. The mixture was then poured into 1 litter of methanol to precipitate the polymers. The deposited precipitate was then triturated in a mixer, washed with methanol until the acid components were removed, heated to dry to give 34g of chloromethylated polyphenylene ethersulfone (in formula (VI), wherein $Ar_1$' = B2'). The compound obtained can be identified by NMR. The chemical shift of the methylene proton in chloromethyl was 4.64 ppm. The introduction rate of a chloromethyl group can be determined in terms of integration ratio of proton and was calculated to be 36%.

The obtained chloromethylated polyphenylene ethersulfone was then placed in 1000ml 4-neck round bottom flask equipped with a reflux condenser having a desiccant tube containing calcium chloride, a stirrer and a thermometer,

and was added 600ml of N-methylpyrolidone(NMP). To the mixture, were added 9g of potassium thioacetate and 50ml of NMP solution, and the mixture was heated and stirred at 80°C for 3 hours. The solution was then poured into 1 litter of water to precipitate the polymers. The deposited precipitate was then pulverized with a mixer, washed with water, heated to dry to give 31g of acetylthiolated polyphenylene ethersulfone.

20g of the obtained acetylthiolated polyphenylene ethersulfone was then placed in 500ml 4-neck round bottom flask equipped with a reflux condenser having a desiccant tube containing calcium chloride, a stirrer and a thermometer, and further added 300ml of acetic acid. 20ml of hydrogen peroxide solution was added, and the mixture was heated and stirred at 45°C for 4 hours. The solution of reaction mixture was then poured into 1 litter of aqueous solution of 6N sodium hydroxide with cooling and stirring for a while. The polymers were filtrated and washed with water until the alkali was removed. The polymers were then added to 300ml of 1N HCl and stirred for a while. The polymers were filtrated, washed with water until the acid was removed, dried under reduced pressure to give 20g of sulfomethylated polyphenylene ethersulfone (yield of about 91% from the chloromethylated compounds). The presence of a sulfomethyl group was confirmed by Proton NMR Chemical Shift of methylene proton which has been shifted to 3.78 ppm. The ion-exchange capacity was determined to be 0.83meq/g by titration.

Example 2

Synthesis of Sulfomethylated polyethersulfone (in formula (V), wherein $Ar_1$ = B3);

23g of polyethersulfone (Brand Name: SUMIKAEXCEL PES7600p; by Sumitomo Chemical Co.,Ltd.) and 330ml of nitrobenzene were placed in 500ml 4-neck round bottom flask equipped with a reflux condenser having a desiccant tube containing calcium chloride, a stirrer and a thermometer, followed by added the mixture solution of 40g of chloromethylmethylether and 7.8g of tin chloride anhydride(IV) dropwisely, and the mixture was heated and stirred at 50°C for 8 hours. The mixture was then poured into 1 litter of methanol to precipitate the polymers. The deposited precipitate was then pulverized with a mixer, washed with methanol until the acid was removed, heated to dry to give 25g of chloromethylated polyethersulfone (in formula (VI), wherein $Ar_1$' = B3'). The compound obtained can be identified by NMR. The chemical shift of methylene proton in chloromethyl was 4.8 ppm. The introduction rate of a chloromethyl group can be determined in terms of integration ratio of proton and was calculated to be 34%.

25g of the obtained chloromethylated polyethersulfone was then placed in 1000ml 4-neck round bottom flask equipped with a reflux condenser having a desiccant tube containing calcium chloride, a stirrer and a thermometer, and was added 375ml of N-methylpyrolidone(NMP). To the mixture was added 4.3g of potassium thioacetate under stirring, and further stirred at room temperature for 1 hour. The solution was then poured into 3 litters of water to precipitate the polymers. The deposited precipitate was then pulverized with a mixer, washed with water, heated to dry to give 24g of acetylthiolated polyethersulfone.

24g of the obtained acetylthiolated polyethersulfone was then placed in 500ml 4-neck round bottom flask equipped with a reflux condenser having a desiccant tube containing calcium chloride, a stirrer and a thermometer, and further was added 350ml of acetic acid. 18ml of 30% hydrogen peroxide solution was added, then the mixture was heated and stirred at 70°C for 8 hours. The content was recovered by filtration, washed with water until the acid was removed, dried under reduced pressure to give 23g of sulfomethylated polyethersulfone (yield of about 92% from the chloromethylated compounds). The presence of a sulfomethyl group was confirmed by Proton NMR Chemical Shift of methylene proton which has been shifted to 3.85 ppm. The ion-exchange capacity was determined to be 1.29 meq/g by titration.

Example 3

Synthesis of Sulfomethylated polysulfone (in formula (V), wherein Ar = B4);

31g of polysulfone (Brand Name: UDEL P-1700NT11; by Amoco) and 300ml of tetrachloroethane were placed in 500ml 4-neck round bottom flask equipped with a reflux condenser having a desiccant tube containing calcium chloride, a stirrer and a thermometer, then was added 18g of chloromethylmethylether, followed by added the mixture solution of 1ml of tin chloride anhydride(IV) and 20ml of tetrachloroethane dropwisely, the mixture was heated and stirred at 60°C for 120 minutes. The mixture was then poured into 1 litter of methanol to precipitate the polymers. The deposited precipitate was then pulverized with a mixer, washed with methanol until the acid was removed, heated to dry to give 33g of chloromethylated polysulfone (in formula (VI), wherein $Ar_1$' = B4'). The compound obtained can be identified by NMR. The chemical shift of the methylene proton in chloromethyl was 4.53 ppm. The introduction rate of chloromethyl groups can be determined in terms of integration ratio of proton and was calculated to be 38%.

15g of the obtained chloromethylated polysulfone was then placed in 500ml 4-neck round bottom flask equipped with a reflux condenser having a desiccant tube containing calcium chloride, a stirrer and a thermometer,

and was added 200ml of N-methylpyrolidone(NMP). To the mixture was added 4.6g of potassium thioacetate, and the resulting mixture was heated and stirred at 80°C for 3 hours. The solution was then poured into 1 litter of water to precipitate the polymers. The deposited precipitate was then pulverized with a mixer, washed with water, heated to dry to give 17g of acetylthiolated polysulfone.

17g of the obtained acetylthiolated polysulfone was then placed in 500ml 4-neck round bottom flask equipped with a reflux condenser having a desiccant tube containing calcium chloride, a stirrer and a thermometer, and further was added 200ml of acetic acid. 50ml of hydrogen peroxide solution was added, and the mixture was heated and stirred at 65°C for 4 hours. The reaction solution was then poured into 1 litter of aqueous solution of 6N sodium hydroxide with cooling and stirring for a while. The polymers were filtrated and washed with water until the alkali was removed. The polymers were then added to 300ml of 1N HCl and stirred for a while. The polymers were filtrated, washed with water until the acid was removed, dried under reduced pressure to give 15g of sulfomethylated polysulfone (yield of about 99% from the chloromethylated compounds). The presence of a sulfomethyl group was confirmed by Proton NMR Chemical Shift of methylene proton which has been shifted to 4.06 ppm. The ion-exchange capacity was determined to be 0.80 meq/g by titration.

Comparative Example 1

20g of chloromethylated polyethersulfone synthesized in Example 2 was placed in 1000ml 4-neck round bottom flask equipped with a reflux condenser having a desiccant tube containing calcium chloride, a stirrer and a thermometer, and was added 500 ml of water. To the solution, 25g of sodium bisulfite was added and the mixture was refluxed for 24 hours. The polymers were then filtrated, and washed with 1N HC1 and water, followed by heated to dry to give 19g of sulfomethylated polyethersulfone.

It was confirmed by NMR that the sulfomethyl group had scarcely been reacted. Further, the ion-exchange performance was also scarcely detected.

Comparative Example 2

0.5g of chloromethylated polysulfone synthesized in Example 3 was placed in 100ml 4-neck round bottom flask equipped with a reflux condenser having a desiccant tube containing calcium chloride, a stirrer and a thermometer, and was added 40 ml of water. To the solution, 15g of sodium sulfite was added. The mixture was heated and refluxed at 80°C for 8 hours. The polymers were then filtrated, and washed with 1N HCl and water, followed by heated to dry to give 0.5g of sulfomethylated polysulfone.

It was confirmed by NMR that the chloromethyl group had scarcely been reacted. Further, the ion-exchange performance was also scarcely detected.

Comparative Example 3

1 g of chloromethylated polysulfone synthesized in Example 3 was placed in 100 ml 4-neck round bottom flask equipped with a reflux condenser, having a desiccant tube containing calcium chloride, a stirrer and a thermometer, and was dissolved by adding 20 ml of chloroform. To the solution, 0.7g of sodium sulfate dissolved in 20 ml of water and 50mg of tetrabutylammoniumbromide were added, and the mixture having two phases was heated and stirred at 70°C for 3 hours. The polymers were then filtrated and washed with 1N HCl and water, followed by heated to dry to give 0.5g of sulfomethylated polysulfone. It was confirmed by NMR that the chloromethyl group had scarcely been reacted. Furthermore, the ion-exchange performance was also scarcely detected.

INDUSTRIAL APPLICABILITY

As described above, according to the method of present invention, the leaving group on the side chain comprised in the polymer can be converted into a sulfonic group nearly quantitatively, more particularly the leaving groups not only on the surface but inside the polymer matrix can be converted into a sulfonic groups, whereby an ion-exchange resin comprising a sulfoalkyl group as an ion-exchange group, exhibiting high ion-exchange performance can be produced at a low cost.

## Claims

1. A process for the production of sulfoalkyl-containing polymers **characterized by** subjecting a polymer having a side chain containing a leaving group X represented by the structural formula (I):

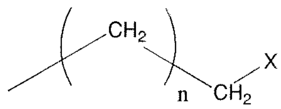

(I)

[wherein X is a leaving group, and n is an integer of 0 to 6] to substitution of X with an acylthio group, and then oxidizing the acylthio group into a sulfonic group.

**2.** The process for the production according to Claim 1, wherein n in said side chain (I) is 0,

**3.** The process for the production of sulfoalkyl-containing polymers according to Claim 1 or 2, wherein a leaving group X is Cl, Br, I or a substituent represented by the following formula (II):

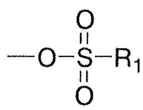

(II)

[wherein $R_1$ is an alkyl group having 1 to 6 carbon atoms, a perfluoro($C_1$-$C_3$)alkyl group or an aryl group],

**4.** The process for the production of sulfoalkyl-containing polymers according to any of Claims 1 to 3, wherein an acylthio group represented by the following formula (III):

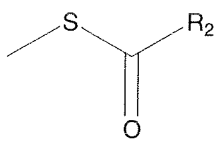

(III)

[wherein $R_2$ is an alkyl group having 1 to 6 carbon atoms or an aryl group],

**5.** The process for the production of sulfoalkyl-containing polymers according to any one of Claims 1 to 4 , wherein the backbone structure of the polymer having a side chain (I) is a polysulfone structure represented by the following formula (IV):

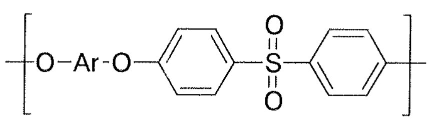

(IV)

wherein Ar is

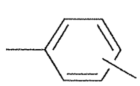 (A1) , 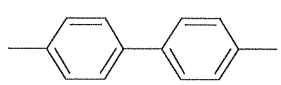 (A2) ,

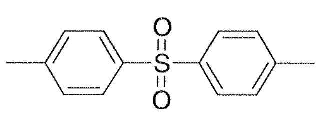 (A3) or 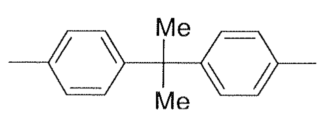 (A4)

**6.** A process for the production of sulfomethylated polysulfone, represented by the following formula (V):

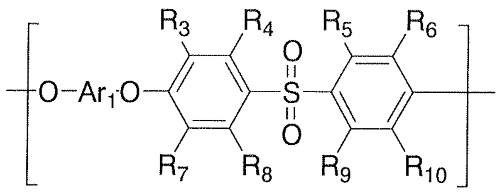 (V)

[wherein $Ar_1$ is

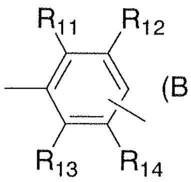 (B1) , 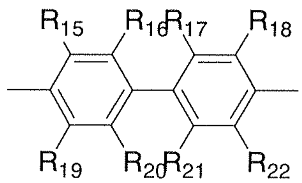 (B2) ,

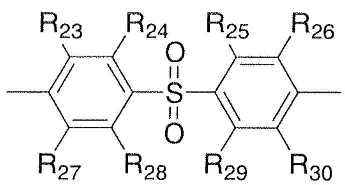 (B3) or 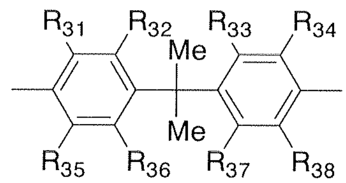 (B4)

$R_3$ - $R_{38}$ independently is a hydrogen atom or a sulfomethyl group], **characterized by** subjecting an aromatic ring of a polysulfone polymers represented by the following formula (IV):

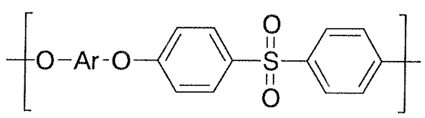 (IV)

[wherein Ar is

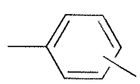 (A1) , 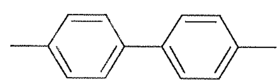 (A2) ,

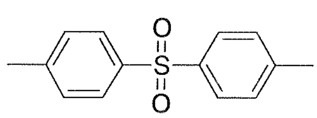 (A3) or 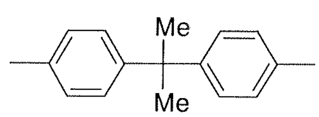 (A4) ,

to (a) chloromethylation, (b) then subjecting the formed chlorine to acetylthiolation, followed by further oxidation to be converted into a sulfonic group.

**7.** An acetylthiomethyl-containing polysulfone, represented by the following formula (VI):

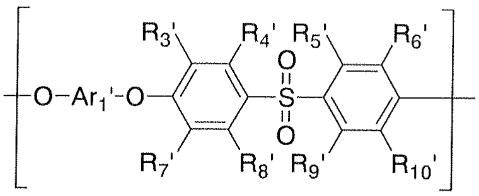 (VI)

wherein $Ar_1$' is

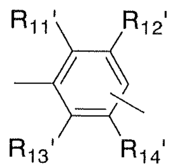 (B1)' , 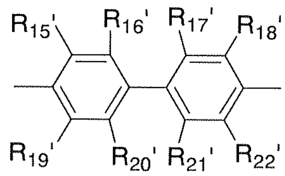 (B2)' ,

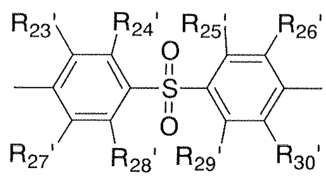 (B3)' or 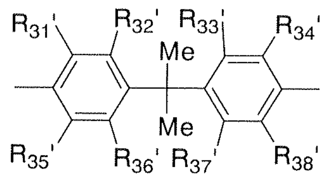 (B4)'

$R_3$' to $R_{38}$' independently is a hydrogen atom, or

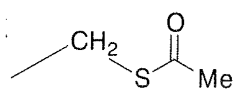

.

# INTERNATIONAL SEARCH REPORT

International application No.
PCT/JP03/13085

A. CLASSIFICATION OF SUBJECT MATTER
Int.Cl[7] C08G75/23, B01J39/18

According to International Patent Classification (IPC) or to both national classification and IPC

B. FIELDS SEARCHED

Minimum documentation searched (classification system followed by classification symbols)
Int.Cl[7] C08G75/00-75/32, C08G85/00, C07B45/00-45/06, C07C303/00-303/46, C07C327/20-327/34

Documentation searched other than minimum documentation to the extent that such documents are included in the fields searched

Electronic data base consulted during the international search (name of data base and, where practicable, search terms used)
CAPLUS

C. DOCUMENTS CONSIDERED TO BE RELEVANT

| Category* | Citation of document, with indication, where appropriate, of the relevant passages | Relevant to claim No. |
|---|---|---|
| Y | JP 2002-110174 A (Hitachi, Ltd.), 12 April, 2002 (12.04.02), Claims; Par. Nos. [0027], [0028], [0143], [0149] & US 2002/0061431 A1 | 1-7 |
| Y | US 2892852 A (Nathan H. Koening, et al.), 30 June, 1959 (30.06.59), Claims; column 1, line 68 to column 2, line 2; example 13 (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 December, 2003 (26.12.03) | 20 January, 2004 (20.01.04) |

| Name and mailing address of the ISA/ | Authorized officer |
|---|---|
| Japanese Patent Office | |
| Facsimile No. | Telephone No. |

Form PCT/ISA/210 (second sheet) (July 1998)